# EUROPEAN PATENT APPLICATION

(11) **EP 2 873 317 A1**
(43) Date of publication of application: **20.05.2015**
(21) Application number: 14003884.5
(22) Date of filing: 19.11.2014
(51) Int. Cl.: A01K 1/01

(54) **Litter box for pets**

(30) Priority: 19.11.2013 IT PD20130313
(71) Applicant: Carluccio, Marcello, 35020 Terrassa Padovana (PD) (IT)
(72) Inventor: Carluccio, Marcello, 35020 Terrassa Padovana (PD) (IT)
(74) Representative: Maiello, Helenio Francesco

(57) **Abstract**

A litter box for pets comprises a lower tray (**2**) adapted to receive and contain liquid feces with no leakage and having a closed first bottom wall (**4**) and an open first upper peripheral edge (**5**), an upper tray (**3**) having a second bottom wall (**6**) with a grid-shaped portion (**10**) with meshes (**11**) of predetermined surface extension to allow the passage of urine from the upper tray (**3**) to the lower tray (**2**) and an outer second peripheral edge (**7**) sized to rest on the first peripheral edge (**5**) and hold the second bottom wall (**6**) raised with respect to the first bottom wall (**4**), a litter (**14**) distributed in the upper tray (**3**) in an amount sufficient to cover at least the grid-shaped portion (**10**) and comprising a loose draining material for the at least partial drainage of urine constituted by a plurality of pads (**15**) in a non-absorbent and washable material and having a surface extension greater than that of the meshes (**11**) of the grid-shaped portion (10).

## Description

### Technical Field

The present invention relates to the technical field of products for the care and hygiene of the animals and has particularly for object a litter box for pets, such as dogs and cats.

### State of the art

As is known, the most common litter boxes for pets are simple containers with a rectangular base made of plastic or other suitable material and opened at the top to be filled with a granular litter material adapted to absorb the urine of the pets and designed to be disposed of once exhausted.

Some litters have properties of odor absorption, but in any case they are designed to be disposed of after a variable time depending on type and uses.

The main drawback of these litter boxes is their lack of hygiene, with consequent development of unpleasant smells.

In addition, the continuous disposal of exhausted litter, other than making the product low environmentally friendly as it leads to the creation of large amounts of waste, is an unpleasant task that often leads pet owners to neglect proper hygiene of the box or even to deprive themselves of the pet company.

To overcome these drawbacks some solutions have been proposed which involve the use of litter boxes designed to simplify the cleaning operations.

From NL9500326, CH688428 and EP1488690 litter boxes are known which comprise a lower collecting tray and an upper collecting tray designed to lean on the lower one with its bottom wall suitably spaced from the bottom wall of the lower tray.

The bottom wall of the upper tray is perforated to allow the passage of urine into the lower collection tray.

Moreover, an absorbent granular material adapted to retain part of the absorbed liquid is distributed on the upper bottom wall and/or on the lower one.

These solutions, while being advantageous in part because they avoid stagnation of not absorbed liquid, providing the possibility to neutralize the smells of the liquid collected in the lower tray by inserting other absorbent material therein, have not proven to be satisfactory yet, since in any case they require the collection and disposal of exhausted litter.

US4444148 discloses such a litter box that provides, however, the use of non-absorbent granules that do not need to be disposed of after long use as being washable with water, but not, however, be deeply sanitized, for example by disinfection or cold or hot sterilization.

Furthermore, the particular granules, of diameter between 2.5mm and 6.5mm so that the layer of litter is sufficiently compact and with a low degree of vacuum, have demonstrated to be not effective as they do not allow the complete and fast drainage of liquids towards the lower tray, with eventual accumulation of significant amounts of urine in the upper tray, which can be eliminated only at the time of washing. Moreover, the small size promotes the permanence of solid feces residuals which are difficult to remove but eliminating also part of the granules.

The same granules, then, during the washing or cleaning can easily be dispersed, so that over time it is necessary to provide for the reinstatement of the litter by introducing new material.

Not least, the presence of a flat upper bottom wall further obstructs the drainage of liquids.

### Scope of the invention

An object of the present invention is to overcome the above drawbacks, providing a litter box for pets that is particularly efficient and relatively cost-effective.

A particular object is to provide a litter box for pets that simplifies the operations of removal of feces and which allows to maintain high hygienic conditions.

Another object is to provide a litter box for pets that simplifies the collection and discharge of both liquid and solid feces.

Still another object is to provide a litter box for pets that does not require the substitution of the litter material and wherein the litter material is formed by draining material easily washable without risk of its dispersion, not requiring replacement or replenishing with other material.

These objects, as well as others which will become more apparent hereinafter, are fulfilled by a litter box for pets that, according to claim 1, comprises a lower tray adapted to receive and contain liquid feces with no leakage and having a closed first bottom wall and an open first peripheral upper edge, an upper tray having a second bottom wall with a grid-shaped portion with meshes of predetermined surface extension to allow the passage of urine from said upper tray to said lower tray and an outer second peripheral edge sized to rest on said first peripheral edge and maintain said second bottom wall raised with respect to said first bottom wall, a litter distributed in said upper tray in an amount sufficient to cover at least said grid-shaped portion and comprising a loose draining material for the at least partial drainage of urine.

The draining material is constituted by a plurality of pads in non-absorbent and washable material having a surface extension greater than that of said meshes of said grid-shaped portion.

Thanks to this combination of features, the litter will allow complete drainage of liquid feces avoiding that a non-negligible amount of liquid feces remains between the pads, as the size of the same will not allow liquid particles could remain entrapped therebetween, except for a minimum amount that could remain in adhesion on their surface.

For the same reasons, there will be no residual of solid feces that will remain between the pads as they will always be easily identifiable and removable without having to remove and eliminate even the litter material in order to eliminate them.

Suitably, said pads may be in a material selected from the group comprising polymeric materials, glass, ceramic and the like materials, so as to be easily cleanable and possibly also cold or hot sterilizable or cleansed using common detergents, with the possibility of washing even in a common washing machine or dishwasher.

Preferably, the pads may have a diameter between 5mm and 20mm and preferably between 10mm and 15mm, while the meshes of the grid may have maximum dimension between 1mm and 5mm.

In this way, the pads will be sufficiently large to be removed without danger of dispersion and allowing a more immediate identification also of small solid residues. Moreover, the pads may have a flattened shape and substantially circular or oval plan-shape, so that in the event of their exit from the litter box, they do not roll nor constitute a potential danger.

Advantageously, the second bottom wall may have a flared shape with inclined side portions converging towards said grid-shaped portion which is arranged centrally and is substantially flat, to promote the drainage of liquid feces towards the grid-shaped portion.

Further, the lower tray may have a side wall with at least one inclined slit to facilitate the discharge of liquid feces collected thereinside without it being necessary to remove the upper tray.

Not least, the first bottom wall may have at least one inclined portion converging towards a collection chamber filled with deodorant and/or sanitizing liquid adapted to neutralize the liquid feces collected in said lower tray, thus ensuring at any time hygiene and absence of smell.

Advantageous embodiments of the invention are according to the dependent claims.

### Brief description of the drawings

Further features and advantages of the invention will become more apparent in light of the detailed description of some preferred but not exclusive embodiments of a litter box for pets according to the invention, shown by way of non-limiting example with the aid of the accompanying drawings wherein:
**FIG. 1** is a perspective view of a litter box in a first preferred embodiment during assembly and without litter;
**FIG. 2** is an exploded perspective view of the litter box of Fig. 1;
**FIG. 3** is a cross section view of the litter box of Fig. 1 with the litter thereinside and in a second preferred embodiment;
**FIG. 4** is a cross section view of an upper tray of a litter box in a third preferred embodiment.

### Best modes of carrying out the invention

With reference to the cited figures, some preferred but not limiting embodiments of the litter box for pets are shown.

The box may be used without any particular limitation for the collection and subsequent disposal of solid and liquid feces of pets, such as, but not limited to, dogs, cats, small rodents.

In its most basic form the box, generally referred with **1**, comprises a lower tray **2** adapted to receive and contain liquid feces without leakage and an upper tray 3 designed to accommodate the pet during the expulsion of the feces.

The lower tray **2** has a closed first bottom wall **4** and an open first upper peripheral edge **5.**

The upper tray **3** has a second bottom wall **6** and an outer second peripheral edge **7** sized to rest on the first peripheral edge **5** and maintain the second bottom wall **6** raised with respect to the first bottom wall **4.**

Both the lower tray **2** and the upper tray **3** may be made in any material suitable for contact with animal feces and generally will be in a polymeric material.

The second peripheral edge **7** of the upper tray **3** may be positioned at any height of the side wall **8** of the upper tray **3** but preferably will coincide with the upper edge of the same.

Of course, the second upper edge 7 will have an opening with such a width as to fully rest on the first edge **4** while the side wall **8** of the upper tray **3** will be sized to fit in the lower tray **2** for its whole perimeter.

The side walls **8, 9** of the two trays **3, 2** will be sized in height to hold the two bottom walls **6, 4** at a distance of few centimeters, e.g. between 2cm and 5cm.

The second bottom wall **7** has a grid-shaped portion **10** with meshes **11** having predetermined surface extension to allow the passage of urine from the second tray **3** to the first tray **2**.

Preferably, the meshes **11** have a rectangular or square shape with sides of maximum dimension between 1mm and 5mm. Of course, the meshes **11** may also have a different shape, such as circular or oval.

The grid-shaped portion **10** may also be defined by a portion of the second bottom wall **6** suitably perforated.

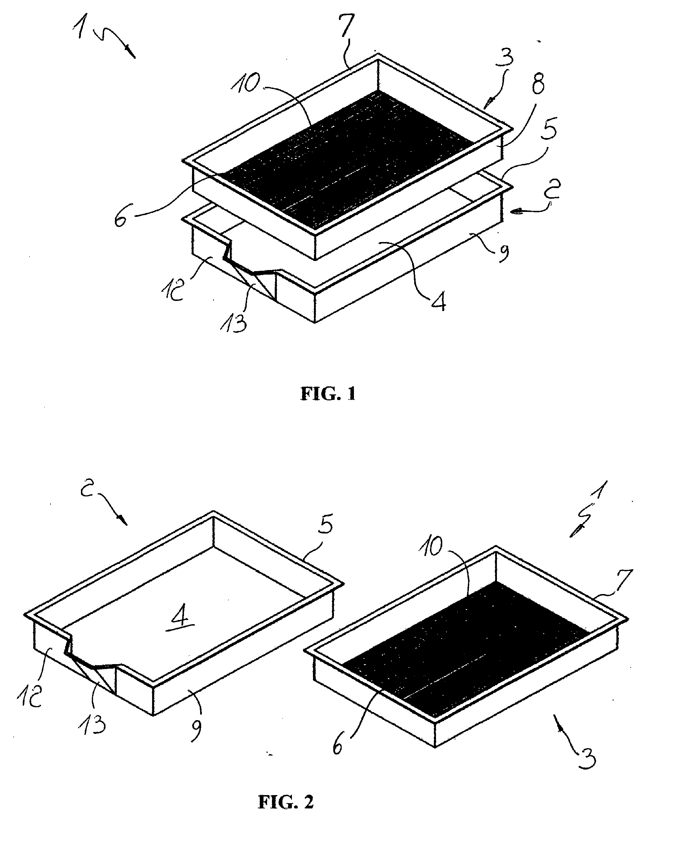

**Fig. 1** shows a first embodiment of the box 1 wherein the upper tray **3** has the respective bottom wall **6** completely grid-shaped and with a substantially flat shape.

As more clearly visible in **Fig. 2**, the first bottom wall **4** is also substantially flat.

A slide-inclined slit **13** is arranged on a side **12** of the side wall **9** of the lower tray **2** for the discharge of liquid feces collected inside the lower tray **2.**

A litter **14** will be distributed on the second bottom wall 6 in an amount sufficient to cover at least the grid-shaped portion **10.**

The litter **14** comprises or consists of a loose draining material for the at least partial drainage of the urine towards the lower tray **2.**

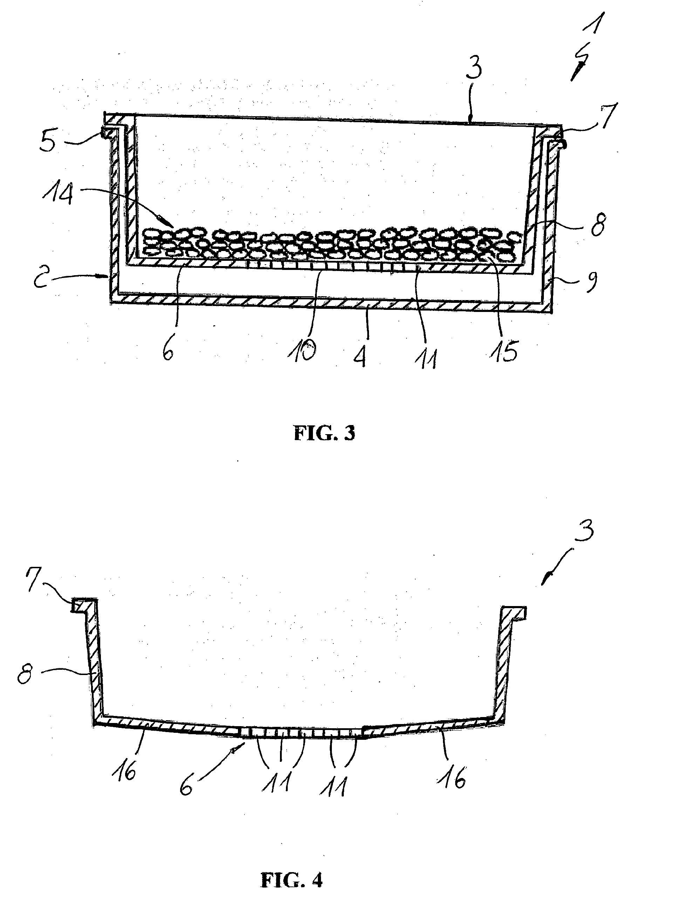

As more clearly visible in **Fig. 3**, the draining material is constituted by a plurality of pads **15** having surface extension greater than that of the meshes **11**.

In the preferred but not exclusive configuration of the figure, the pads **15** are of flat shape and a substantially circular or oval in plan, with diameter between 5mm and 20mm and preferably between 10mm and 15mm.

The pads **15** may be all equal to each other or different, and possibly also of irregular shape.

The pads **15** will be made of one or more non-absorbent material, washable with water and possibly adapted to be hot and/or cold sterilized or sanitized.

For example, the pads **15** will be in a polymeric material and/or glass and/or ceramic and/or metallic material.

In this configuration the grid-shaped portion **10** extends only in a central band of the second bottom wall **6** and preferably extends throughout the length thereof.

**Fig. 4** shows a variant of the upper tray **3** in which the second bottom wall **6** has a flared shape with inclined side portions **16** converging towards the grid-shaped portion **10** which is arranged centrally and is substantially flat.

According to a further variation, not shown, the first bottom wall **4** may also have at least one inclined portion converging towards a central collection chamber adapted to be filled with deodorant and/or sanitizing liquid, e.g. bleach, adapted to neutralize the liquid feces collected thereinside.

According to yet a further variation, not shown, the litter box **14** may comprise a mat of draining synthetic grass disposed at least on the grid-shaped portion **10.**

From the above it appears evident that the invention fulfills the intended objects and in particular that of providing a litter box for pets that is particularly efficient and easy to clean.

The box according to the invention is susceptible to numerous modifications and variations all falling within the inventive concept expressed in the accompanying claims. All the details may be replaced with other technically equivalent elements, and the materials may be different according to requirements, without departing from the scope of the present invention.

Although the box has been disclosed with particular reference to the accompanying figures, reference numbers used in the description and in the claims are used to improve the intelligence of the invention and do not constitute any limitation of the claimed scope.

## Claims

1. A litter box for pets, comprising:
- a lower tray (**2**) adapted to receive and contain liquid feces with no leakage and having a closed first bottom wall (**4**) and an open first upper peripheral edge (**5**);
- an upper tray (**3**) having a second bottom wall (**6**) with a grid-shaped portion (**10**) with meshes (**11**) of predetermined surface extension to allow the passage of urine from said upper tray (**3**) to said lower tray (**2**) and an outer second peripheral edge (**7**) sized to rest on said first peripheral edge (**5**) and hold said second bottom wall (**6**) raised with respect to said first bottom wall (**4**);
- a litter (**14**) distributed in said upper tray (**3**) in an amount sufficient to cover at least said grid-shaped portion (**10**) and comprising a loose draining material for the at least partial drainage of urine;
**characterized in that** said draining material is constituted by a plurality of pads (**15**) in a non-absorbent and washable material and having a surface extension greater than that of said meshes (**11**) of said grid-shaped portion (**10**) to allow complete drainage of liquid feces and promote the complete removal of the solid feces without residual in said upper tray (**3**), avoiding the dispersion of said litter (**14**).

2. Litter box according to claim 1, **characterized in that** said pads (**15**) are in a material selected from the group comprising polymeric materials, glass, ceramic and the like materials.

3. Litter box according to claim 1 or 2, **characterized in that** said pads (**15**) have a diameter between 5mm and 20mm and preferably between 10mm and 15mm.

4. Litter box according to any one of the preceding claims, **characterized in that** said pads (**15**) have flat shape and a substantially circular or oval plan shape.

5. Litter box according to any one of the preceding claims, **characterized in that** said meshes (**11**) have a maximum size between 1mm and 5mm.

6. Litter box according to any one of the preceding claims, **characterized in that** said second bottom wall (**6**) has a flared shape with inclined side portions (**16**) converging towards said grid-shaped portion (**10**) which is arranged centrally and is substantially flat.

7. Litter box according to any one of the preceding claims, **characterized in that** said lower tray (**2**) has a side wall (**9**) with at least one inclined slit (**13**) for the discharge of liquid feces collected thereinside.

8. Litter box according to any one of the preceding claims, **characterized in that** said litter (**14**) comprises a mat of draining synthetic grass disposed at least on said grid-shaped portion (**10**).

9. Litter box according to any one of the preceding claims, **characterized in that** said first bottom wall (**4**) has at least one inclined portion converging towards a collection chamber filled with deodorant and/or sanitizing liquid adapted to neutralize the liquid feces collected in said lower tray (**2**).
